# EUROPEAN PATENT APPLICATION

(11) **EP 4 844 224 A1**
(43) Date of publication of application: **25.11.2026**
(21) Application number: 26175536.7
(22) Date of filing: 29.04.2026
(51) Int. Cl.: F03D 7/02, F03D 1/06

(54) **BLADE ASSEMBLY, WIND TURBINE AND NOISE REDUCER**

(30) Priority: 19.05.2025 CN 202510643950
(71) Applicant: Envision Energy Co., Ltd., Wuxi, Jiangsu 214400 (CN)
(72) Inventor: PAN, Zhen, Jiangyin City, Wuxi City, Jiangsu Province (CN); JIANG, Yunfei, Jiangyin City, Wuxi City, Jiangsu Province (CN); SINGH, Manjinder Jagjit, Boulder, CO 80302 (US); XU, Lifu, Jiangyin City, Wuxi City, Jiangsu Province (CN); ZHONG, Dawei, Jiangyin City, Wuxi City, Jiangsu Province (CN); WANG, Zhen, Jiangyin City, Wuxi City, Jiangsu Province (CN)
(74) Representative: Herrero & Asociados, S.L.

(57) **Abstract**

Disclosed are a blade assembly, a wind turbine, and a noise reducer. The blade assembly includes: a blade body provided with a blade root, a blade tip, a leading edge and a trailing edge, the leading edge and the trailing edge extending between the blade root and the blade tip; and a noise reducer arranged on the blade body, the noise reducer including at least one reinforcing member and a plurality of spacers arranged at intervals along a spanwise direction of the blade body, the reinforcing member being connected with at least one of the spacers, and the reinforcing member and the spacers being arranged adjacent to the trailing edge. In a direction parallel to a chord of the blade body, at least some of the spacers and the reinforcing member are located outside a boundary defined by the chord, and there is an interval space between the reinforcing member and the trailing edge. A technical solution provided by the disclosure reduces a rotating noise of the blade.

## Description

### TECHNICAL FIELD

The present disclosure relates to the technical field of wind turbine blades, and in particular to a blade assembly, a wind turbine and a noise reducer.

### BACKGROUND

Wind turbines are driven by wind force to rotate their blades to convert wind energy into mechanical energy, and then a generator is driven to rotate through a hub and a gear box to convert the mechanical energy into electrical energy by the generator's principle of electromagnetic induction.

However, during the operation of wind turbines, the blades generate aerodynamic noise as they rotate through the air, resulting in noise pollution that disrupts the normal lives of nearby residents.

### SUMMARY

The present disclosure aims at providing a blade assembly, a wind turbine, and a noise reducer, which may reduce a rotating noise of a blade.

According to one aspect of the present disclosure, a blade assembly is provided. The blade assembly includes: a blade body provided with a blade root, a blade tip, a leading edge and a trailing edge, where the leading edge and the trailing edge extend between the blade root and the blade tip; and

a noise reducer arranged on the blade body, where the noise reducer includes at least one reinforcing member and a plurality of spacers arranged at intervals along a spanwise direction of the blade body, the reinforcing member is connected with at least one of the spacers, and the reinforcing member and the spacers are arranged adjacent to the trailing edge, where, in a direction parallel to a chord of the blade body, at least some of the spacers and the reinforcing member are located outside a boundary defined by the chord, and there is an interval space between the reinforcing member and the trailing edge.

Through the above solution, an air flow leaving the blade body from the trailing edge may flow through the noise reducer containing the at least one reinforcing member and the plurality of spacers, and the noise reducer reduces an aerodynamic noise. Meanwhile, the reinforcing member may be connected with at least one spacer to improve an overall strength of the noise reducer, avoid the noise reducer being broken by a pneumatic load, improve a static strength and a fatigue strength, and improve a service life. The reinforcing member may also be coupled with a flow field of the trailing edge together with the spacers to participate in noise reduction, change a strength and a spectral structure of a sound source, and transfer more noise energy to regions that are insensitive to human ears and regions with high atmospheric dissipation rate to reduce the noise.

Alternatively, in the direction parallel to the chord of the blade body, at least some of the spacers are located outside the boundary defined by the chord.

Alternatively, the spacer is provided with a first end and a second end, and in the direction parallel to the chord of the blade body, the first end is located inside the boundary defined by the chord, and the second end exceeds the trailing edge.

Alternatively, in the direction parallel to the chord of the blade body, the spacer is located outside the boundary defined by the chord.

Through the above solution, all the spacers may participate in noise reduction, improving a noise reduction effect.

Alternatively, the noise reducer further includes a connecting piece, the plurality of spacers are connected to the blade body through the connecting piece, and the connecting piece is spaced from the reinforcing member.

Through the above solution, the plurality of spacers and the connecting piece may be integrally formed in advance, and may be integrally installed on the blade body during assembly, which facilitates an installation operation and improves an installation efficiency.

Alternatively, the noise reducer further includes a positioning piece, and the positioning piece is connected with the connecting piece; and when the noise reducer is connected to the blade body, the positioning piece abuts against the trailing edge or a region adjacent to the trailing edge.

Through the above solution, during installation, the noise reducer may first determine an installation position by abutting the positioning piece against the trailing edge or the region adjacent to the trailing edge, and then connect the connecting piece with the blade body to ensure an accuracy of the installation position and ensure the noise reduction effect.

Alternatively, in the noise reducer, a first one of the spacers along the spanwise direction of the blade body is defined as a first spacer, a last one of the spacers is defined as a second spacer, a connection line of a centroid of a first end of the first spacer and a centroid of a second end of the first spacer is defined as a first connection line, a connection line of a centroid of a first end of the second spacer and a centroid of a second end of the second spacer is defined as a second connection line, a connection line of centroids of the first ends of all the spacers is defined as a third connection line, and a connection line of centroids of the second ends of all the spacers is defined as a fourth connection line; where, the first connection line, the second connection line, the third connection line, and the fourth connection line are connected to form a three-dimensional curved surface.

Alternatively, as viewed from a top view of the noise reducer, the reinforcing member is configured as a quadrilateral and is provided with a first side, a second side, a third side, and a fourth side which are sequentially connected; and the first side and the third side are parallel to each other and form a preset angle with a center line of the spacers.

Through the above solution, the reinforcing member may not only disperse a large-scale eddy current into a small-scale eddy current, but also transfer the noise to a region insensitive to human ears, thereby reducing a noise level. Moreover, the first side and the third side, which are inclined at a certain angle, may also effectively reduce a magnitude of the sound source, thereby reducing the noise level.

Alternatively, the preset angle is smaller than 45°.

Alternatively, at least two reinforcing members are provided, and two adjacent reinforcing members are symmetrically arranged with respect to a gap between two adjacent spacers, forming a generally V-shaped configuration with an opening towards the blade body.

Through the above solution, the two reinforcing members are surrounded to form the V-shape, and both an inner side and an outer side of the V-shape may constitute a serrated structure, so that the serrated structure may be used to more effectively suppress the magnitude of the sound source, thereby dispersing the large-scale eddy current, increasing air flow disturbance and reducing the noise level.

Alternatively, cross-sectional shapes of the plurality of spacers are the same or different; and/or, the cross-sectional shapes of at least some of the spacers are selected from one of a rectangle, a circle, a triangle or an oval; and/or, cross-sectional dimensions of at least some of the spacers gradually decrease from first ends of the spacers to second ends of the spacers; and/or, materials of at least some of the spacers are selected from one of a plastic, a composite material, or a porous material.

Through the above solution, the cross-sectional dimensions of at least some of the spacers gradually decrease from the first ends of the spacers to the second ends of the spacers. In this way, while controlling an overall weight of the noise reducer, a root of the spacer may be ensured to be thick enough to avoid the spacer from being broken and damaged, so that a service life is improved.

Alternatively, the blade body is further provided with a suction side and a pressure side, and the noise reducer is fixed on the suction side.

Alternatively, the blade body is further provided with a suction side and a pressure side, and the noise reducer is fixed on the pressure side.

Through the above solution, on one hand, a pressure on the pressure side may press the noise reducer on the pressure side, which improves a stability of the noise reducer when the wind turbine is running.

According to another aspect of the present disclosure, a wind turbine is further provided, where the wind turbine at least includes the blade assembly mentioned above.

According to still another aspect of the present disclosure, a noise reducer is further provided, where the noise reducer at least includes: a connecting piece for being connected with a blade body; a plurality of spacers connected to the connecting piece and arranged at intervals along a predetermined direction; and a reinforcing member connected with at least one of the spacers, and there being an interval space between the reinforcing member and the connecting piece.

Alternatively, the noise reducer further includes a positioning piece, the positioning piece is connected with the connecting piece, and the positioning piece is used for abutting against a trailing edge when the noise reducer is connected to the blade body; and/or,
cross-sectional shapes of the spacers are the same or different; and/or,

the cross-sectional shapes of at least some of the spacers are selected from one of a rectangle, a circle, a triangle or an oval; and/or,

cross-sectional dimensions of at least some of the spacers gradually decrease from first ends of the spacers to second ends of the spacers; and/or,

materials of at least some of the spacers are selected from one of a plastic, a composite material, or a porous material.

### BRIEF DESCRIPTION OF THE DRAWINGS

In order to illustrate the technical solutions of the embodiments of the present disclosure more clearly, the drawings used in the description of the embodiments will be briefly described below. Obviously, the drawings in the following description are merely some embodiments of the present disclosure. Those of ordinary skills in the art may also obtain other drawings based on these drawings without going through any creative effort.
FIG. 1 shows a schematic structural diagram of a wind turbine according to one embodiment of the present disclosure;
FIG. 2 shows a schematic structural diagram of a blade assembly according to one embodiment of the present disclosure;
FIG. 3 shows a schematic sectional view of the blade assembly according to one embodiment of the present disclosure;
FIG. 4 shows an enlarged schematic diagram of a portion A of FIG. 3;
FIG. 5 shows a schematic structural diagram of a noise reducer according to one embodiment of the present disclosure;
FIG. 6 shows a schematic top view of the noise reducer according to one embodiment of the present disclosure; and
FIG. 7 shows a schematic diagram of a partial structure of a noise reducer connected to a blade body according to another embodiment of the present disclosure;
FIG. 8 shows a schematic structural diagram of the noise reducer according to another embodiment of the present disclosure; and
FIG. 9 shows a schematic top view of a reinforcing member according to one embodiment of the present disclosure.
Reference Numerals:
10 - wind turbine; 100 - blade assembly; 200 - hub; 300 - nacelle; 400 - tower;
110 - blade body; 111 - blade root; 112 - blade tip; 113 - leading edge; 114 - trailing edge; 115 - chord; 116 - suction side; 117 - pressure side;
120 - noise reducer; 121 - reinforcing member; 1211 - first side; 1212 - second side; 1213 - third side; 1214- fourth side; 122 - spacer; 1221 - first end; 1222 - second end; 1223 - first connection line; 1224 - second connection line; 1225 - third connection line; 1226 - fourth connection line; 123 - connecting piece; 124 - positioning piece; and
α - preset angle; and β - three-dimensional curved surface.

### DETAILED DESCRIPTION OF THE EMBODIMENTS

To make the objects, technical solutions and advantages of the present disclosure be clearer, the technical solutions in the embodiments of the present disclosure will be clearly and completely described hereinafter with reference to the drawings in the embodiments of the present disclosure. It is apparent that the described embodiments are merely some, rather than all embodiments of the present disclosure.

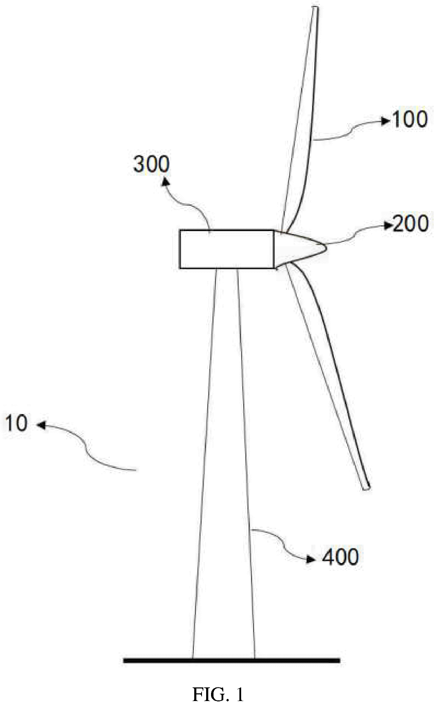

As shown in FIG. 1, the present disclosure provides a wind turbine 10. The wind turbine 10 may include a blade assembly 100, a hub 200, a nacelle 300 and a tower 400. The nacelle 300 is installed at a top of the tower 400, and the nacelle 300 may be fixedly connected with the tower 400 or rotatably connected with the tower 400 through a yaw bearing. The nacelle 300 may be internally provided with a generator, and the hub 200 is connected to a rotor of the generator through a main shaft, or the hub 200 is connected to the generator through a gear box. The blade assembly 100 is connected with the hub 200, so that when the blade assembly 100 is blown by a wind force, the wind force may drive the hub 200 to rotate through the blade assembly 100 to convert wind energy into mechanical energy, and then the rotor of the generator is driven to rotate through the hub 200 to convert the mechanical energy into electrical energy by the generator.

For example, there may be at least two blade assemblies 100 on the hub 200, and the hub 200 is driven to rotate only by the at least two blade assemblies 100. For example, there may be two or three blade assemblies 100. The hub 200 may also be provided with one or more blade assemblies 100 and at least one single blade (which becomes the blade body 110 later), and the blade assemblies 100 and the blade cooperate to drive the hub 200 to rotate.

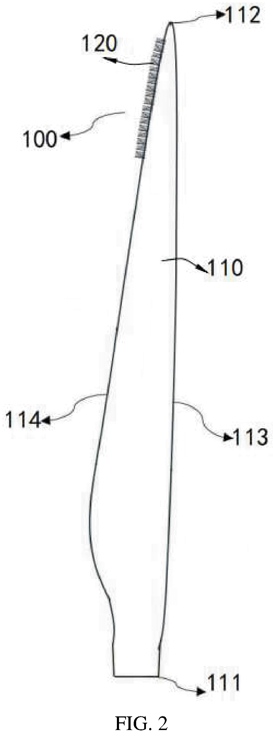

With regard to a specific structure of the blade assembly 100, as shown in FIG. 2 to FIG. 6, in some embodiments, the blade assembly 100 may include a blade body 110. The blade body 110 is provided with a blade root 111 and a blade tip 112 located at two opposite ends, where the blade root 111 is a part of the blade body 110 connected with the hub 200, and has sufficient strength to bear a wind force and a centrifugal force, while the blade tip 112 is a point where the blade body 110 is far away from the hub 200. The blade body 110 is further provided with a leading edge 113 and a trailing edge 114 extending between the blade root 111 and the blade tip 112, where the leading edge 113 is a foremost point in a cross section of the blade body 110, and is a position where an air flow first contacts the blade body 110. The trailing edge 114 is a rearmost point of the cross section of the blade body 110, and is a position where the air flow leaves the blade body 110. When viewed along a spanwise direction of the blade body 110, all points at the leading edge 113 of the cross section are connected into one curve, and all points at the trailing edge 114 of the cross section are connected into one curve. Accordingly, in each cross section, a connecting line between the leading edge 113 and the trailing edge 114 is a chord 115, and a chord length may be gradually changed along the spanwise direction of the blade body 110. It should be pointed out that the spanwise direction of the blade body 110 refers to a lengthwise direction of the blade body 110 in a radial direction of a wind wheel, that is, a direction from the blade root 111 to the blade tip 112.

In the embodiment, the blade assembly 100 may further include a noise reducer 120. The noise reducer 120 is arranged on the blade body 110 to reduce a aerodynamic noise produced when the blade body 110 rotates. Specifically, the noise reducer 120 may include at least one reinforcing member 121 and a plurality of spacers 122 arranged at intervals along the spanwise direction of the blade body 110, the reinforcing member 121 is connected with at least one of the spacers 122, and the reinforcing member 121 and the spacers 122 are arranged adjacent to the trailing edge 114. In a direction parallel to the chord 115, at least some of the spacers 122 and the reinforcing member 121 are located outside a boundary defined by the chord 115, and there is an interval space between the reinforcing member 121 and the trailing edge 114. In other words, in the direction parallel to the chord 115, the reinforcing member 121 and the trailing edge 114 are not connected, and are arranged at an interval. In this way, the air flow leaving the blade body 110 from the trailing edge 114 may flow through the noise reducer 120 containing the at least one reinforcing member 121 and the plurality of spacers 122, and the aerodynamic noise is reduced by the noise reducer 120.

Meanwhile, the reinforcing member 121 may be connected with at least one spacer 122 to improve an overall strength of the noise reducer 120, avoid the noise reducer 120 being broken by a pneumatic load, improve a static strength and a fatigue strength, and improve a service life. The reinforcing member 121 may also be coupled with a flow field of the trailing edge 114 together with the spacers to participate in noise reduction, change a strength and a spectral structure of a sound source, and transfer more noise energy to regions that are insensitive to human ears and regions with high atmospheric dissipation rate to reduce the noise. In particular, the reinforcing member 121 is only required to meet the interval space between the reinforcing member 121 and the trailing edge 114, so that a degree of freedom of shape design of the reinforcing member 121 may be improved to the greatest extent, and an upper limit of noise reduction of the noise reducer 120 may be improved.

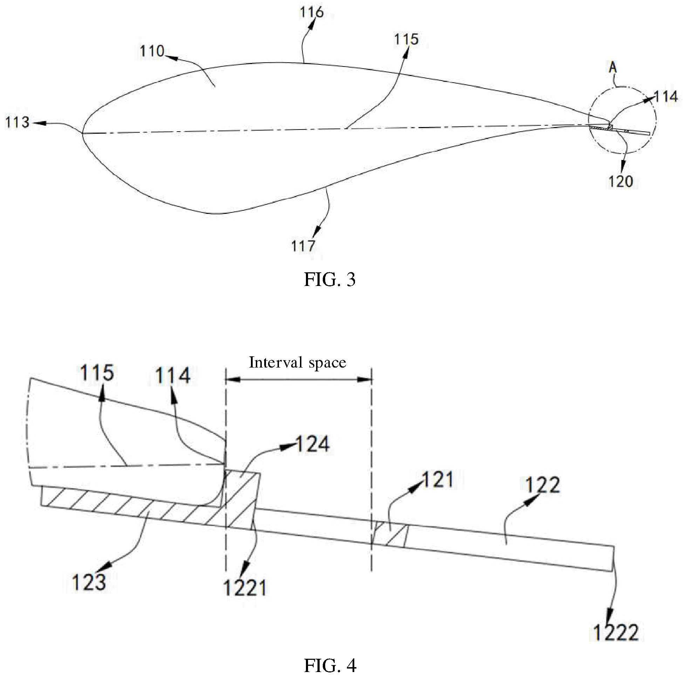

It should be explained that there are a plurality of chords 115 in the blade body 110. The chords 115 defined here refer to the chords 115 with extension lines passing through the spacers 122 and/or the reinforcing member 121 defined here, or refer to the chords 115 adjacent to the spacers 122 and/or the reinforcing member 121 defined here, that is, the chords 115 correspond to the spacers 122 and the reinforcing member 121. For example, in a schematic sectional view of the blade assembly 100 shown in FIG. 3, the chord 115 is unique, the extension line of the chord 115 passes through the spacer 122, and the chord 115 is adjacent to the spacer 122.

Alternatively, the reinforcing member 121 may be connected with one spacer 122, and the reinforcing member 121 may also be connected with at least two spacers 122, thereby connecting the at least two spacers 122 into a whole. There may be only one noise reducer 120 in the blade assembly 100, that is, there may be only one noise reducer 120 on one blade body 110, and the noise reducer 120 with a corresponding length may be arranged according to a required length, so that installation of the noise reducer 120 may be completed by only one-time installation. Of course, there may also be a plurality of noise reducers 120 in the blade assembly 100, and the plurality of noise reducers 120 are arranged along the spanwise direction of the blade body 110, so that a corresponding quantity of noise reducers 120 may be selected according to a required arrangement length, and the plurality of noise reducers 120 may be combined on one blade body 110 to achieve the required length.

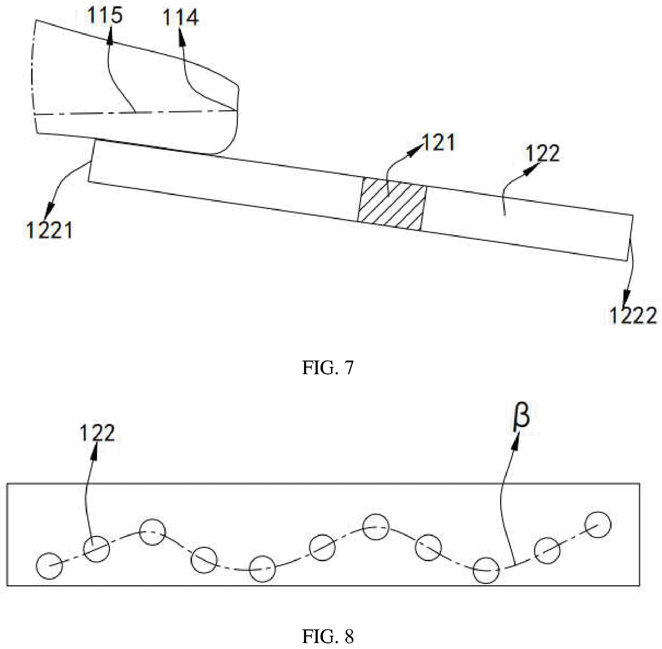

In some embodiments, as shown in FIG. 7, in the direction parallel to the chord 115 of the blade body 110, some of the spacers 122 may be located outside the boundary defined by the chord 115, and another some of the spacers 122 may be located inside the boundary defined by the chord 115.

Illustratively, the spacer 122 is provided with a first end 1221 and a second end 1222 which are oppositely arranged. In the direction parallel to the chord 115 of the blade body 110, the first end 1221 is located inside the boundary defined by the chord 115, and the second end 1222 exceeds the trailing edge 114 so as to be located outside the boundary defined by the chord 115. Alternatively, the first end 1221 may be directly connected with the blade body 110. In order to facilitate an installation operation of the spacers 122, the first ends 1221 of the plurality of spacers 122 may be fixed on the connecting piece 123 first, and then fixed on the blade body 110 through the connecting piece 123.

In some other embodiments, as shown in FIG. 4 to FIG. 6, in the direction parallel to the chord 115 of the blade body 110, the spacers 122 are located outside the boundary defined by the chord 115. In this way, all the spacers 122 may participate in noise reduction, improving a noise reduction effect.

The noise reducer 120 may further include a connecting piece 123, the plurality of spacers 122 are connected to the blade body 110 through the connecting piece 123, and the connecting piece 123 is spaced from the reinforcing member 121. In this way, the plurality of spacers 122 and the connecting piece 123 may be integrally formed in advance, and may be integrally installed on the blade body 110 during assembly, which facilitates an installation operation and improves an installation efficiency.

For example, the connecting piece 123 may be configured in a plate shape, one surface of the connecting piece 123 is bonded with the blade body 110, and the plurality of spacers 122 are arranged on an end part of the blade body 110. Alternatively, the plurality of spacers 121 may be integrally designed with the connecting piece 123 by injection molding, overmolding, casting, or the like. The plurality of spacers 122 may also be designed separately from the connecting piece 123 and then connected to each other as a whole.

In order to improve an accuracy of an installation position of the noise reducer 120 on the blade body 110, in some embodiments, the noise reducer 120 may further include a positioning piece 124, and the positioning piece 124 is connected with the connecting piece 123. When the noise reducer 120 is connected to the blade body 110, the positioning piece 124 abuts against the trailing edge 114 or a region adjacent to the trailing edge 114. In other words, during installation, the noise reducer 120 may first determine the installation position by abutting the positioning piece 124 against the trailing edge 114 or the region adjacent to the trailing edge 114, and then connect the connecting piece 123 with the blade body 110 to ensure the accuracy of the installation position and ensure the noise reduction effect.

As shown in FIG. 3, the blade body 110 is further provided with a suction side 116 and a pressure side 117, where the suction side 116 and the pressure side 117 extend between the blade root 111 and the blade tip 112. As one side of the blade body 110 facing away from the wind, the suction side 116 has low air pressure and generates lift. As one side of the blade body 110 facing towards the wind, the pressure side 117 has relatively high air pressure. In some embodiments, the forgoing noise reducer 120 may be fixed on the suction side 116.

In some other embodiments, the forgoing noise reducer 120 may also be fixed on the pressure side 117. In this way, on one hand, a pressure of the pressure side 117 may press the noise reducer 120 on the pressure side 117 to improve a stability of the noise reducer 120. On the other hand, an acting area of the suction side 116 on the noise reducer 120 is relatively small, which reduces a suction of the suction side 116 on the noise reducer 120 and further improves a connection stability of the noise reducer 120. In this way, while ensuring the connection stability between the noise reducer 120 and the blade body 110, a connection structure between the noise reducer 120 and the blade body 110 may also be appropriately simplified, so that a cost is reduced.

In some embodiments, characteristics of the plurality of spacers 122 may be the same or different. Specifically, cross-sectional shapes of the plurality of spacers 122 may be the same or different. For example, the cross-sectional shapes of the spacers 122 may be selected from one or more of a rectangle, a circle, a triangle or an oval. Lengths of the plurality of spacers 122 may be the same or different. Overall shapes of the plurality of spacers 122 may be the same or different. For example, main extension lines of the spacers 122 may be straight or curved. Taking the main extension lines of the spacers 122 being straight for example, the spacers 122 may be rod-shaped or plate-shaped structures. Materials of the plurality of spacers 122 may be the same or different. For example, materials of at least some of the spacers 122 are selected from one of a plastic, a composite material, or a porous material.

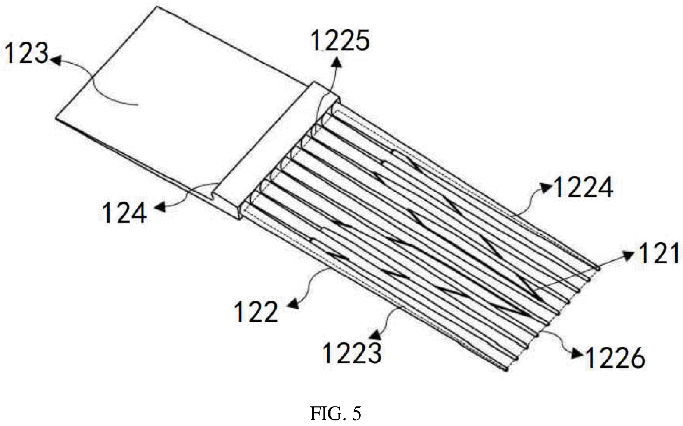

In some embodiments, as shown in FIG. 5, cross-sectional dimensions of some of the spacers 122 may change gradually. For example, the cross-sectional dimensions of at least some of the spacers 122 gradually decrease from first ends 1221 of the spacers 122 to second ends 1222 of the spacers 122. In this way, while controlling an overall weight of the noise reducer 120, a root of the spacer 122 may be ensured to be thick enough to avoid the spacer 122 from being broken and damaged, so that a service life is improved.

In some other embodiments, the cross-sectional dimensions of at least some of the spacers 122 may also be constant.

In the noise reducer 120, a first one of the spacers 122 along the spanwise direction of the blade body 110 is defined as a first spacer, and a last one of the spacers 122 is defined as a second spacer. A connection line of a centroid of a first end 1221 of the first spacer and a centroid of a second end 1222 of the first spacer is defined as a first connection line 1223, a connection line of a centroid of a first end 1221 of the second spacer and a centroid of a second end 1222 of the second spacer is defined as a second connection line 1224, a connection line of centroids of the first ends 1221 of all the spacers 122 is defined as a third connection line 1225, and a connection line of centroids of the second ends 1222 of all the spacers is defined as a fourth connection line 1226. In some embodiments, as shown in FIG. 5, a surface formed by enclosing the first connection line 1223, the second connection line 1224, the third connection line 1225, and the fourth connection line 1226 is a plane. In other words, the plurality of spacers 122 are arranged along a straight line, which facilitates manufacturing and assembly.

In some embodiments, as shown in FIG. 8, a surface formed by connecting the first connection line 1223, the second connection line 1224, the third connection line 1225, and the fourth connection line 1226 is a three-dimensional curved surface β. In other words, the plurality of spacers 122 are arranged along a curve, such as an arc or a wave as shown in FIG. 8.

In the embodiment, in any two-dimensional planar projection of the noise reducer 120 that is not perpendicular to the aforementioned three-dimensional curved surface β, an entirety formed all the reinforcing members 121 in the noise reducer 120 has a first projection area. The three-dimensional curved surface β has a second projection area, an overlapping portion of the first projection area and the second projection area is a third projection area, and a ratio of the third projection area to the second projection area ranges from 1% to 100%. A ratio of the first projection area to the second projection area ranges from 1% to 100%. In other words, the reinforcing member 121 does not completely cover the three-dimensional curved surface β.

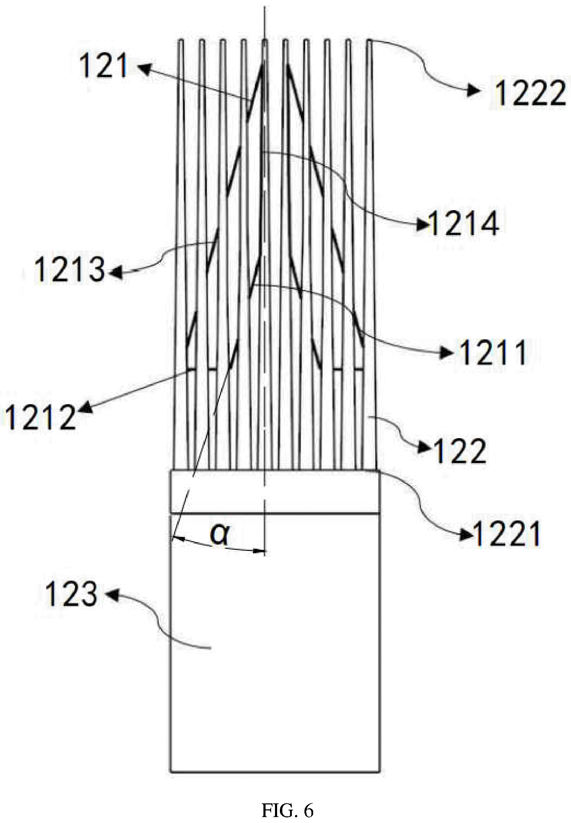

The forgoing reinforcing member 121 may be configured in any shape, specifically, from a top view shown in FIG. 6, the reinforcing member 121 may be a circle, a triangle, a quadrilateral, a drop shape, or any other shape.

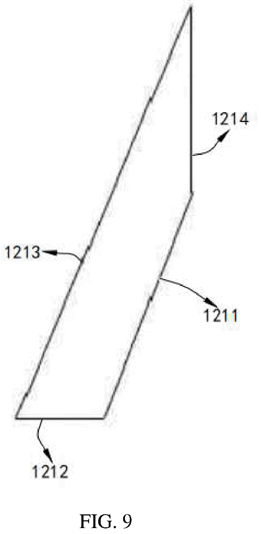

Taking an example where the reinforcing member 121 is configured as a quadrilateral when viewed from a top view of the noise reducer 120, as shown in FIG. 6 and FIG. 9, the reinforcing member 121 has a first side 1211, a second side 1212, a third side 1213, and a fourth side 1214 which are sequentially connected. The first side 1211 and the third side 1213 are parallel to each other and both the first side 1211 and the third side 1213 form a preset angle with a center line of the spacers 122, where the preset angle α is an acute angle and is smaller than 45°. In this way, a strength of a sound source may be effectively suppressed when an air flow flows through the reinforcing member.

Each noise reducer 120 may have one, two, or more reinforcing members 121.

In some embodiments, as shown in FIG. 6, at least two reinforcing members 121 are provided in each noise reducer 120, and two adjacent reinforcing members 121 are symmetrically arranged with respect to a gap between two adjacent spacers 122, forming a generally V-shaped configuration with an opening towards the blade body 110. It may be understood that, the two reinforcing members 121 are surrounded to form the V-shape, and both an inner side and an outer side of the V-shape may constitute a serrated structure, so that the serrated structure may be used to more effectively suppress the magnitude of the sound source, thereby dispersing the large-scale eddy current, increasing air flow disturbance and reducing the noise level.

As an example, the reinforcing member 121 may be designed separately from the plurality of spacers 122, and the reinforcing member 121 is connected with the plurality of spacers 122 by embedding. The reinforcing member 121 may also be integrally designed with the plurality of spacers 122 by injection molding, overmolding, casting, or 3D printing.

According to another embodiment of the present disclosure, a noise reducer 120 is further provided. As shown in FIG. 5 and FIG. 6, the noise reducer 120 at least includes a connecting piece 123, a plurality of spacers 122 and a reinforcing member 121, where the connecting piece 123 is used for being connected with a blade body 110. The plurality of spacers 122 are connected to the connecting piece 123 and the plurality of spacers 122 are arranged at intervals along a predetermined direction. The reinforcing member 121 is connected with at least one of the spacers 122, and there is an interval space between the reinforcing member 121 and the connecting piece 123. When the noise reducer 120 is connected to the blade body 110, the predetermined direction is a spanwise direction of the blade body 110.

Further, the noise reducer 120 further includes a positioning piece 124, the positioning piece 124 is connected with the connecting piece 123, and the positioning piece 124 is used for abutting against a trailing edge 114 when the noise reducer 120 is connected to the blade body 110; and/or,
cross-sectional shapes of the plurality of spacers 122 are the same or different; and/or,
the cross-sectional shapes of at least some of the spacers 122 are selected from one of a rectangle, a circle, a triangle or an oval; and/or,
cross-sectional dimensions of at least some of the spacers 122 gradually decrease from first ends 1221 of the spacers 122 to second ends of the spacers 122; and/or,
materials of at least some of the spacers 122 are selected from one of a plastic, a composite material, or a porous material.

It should be pointed out that specific structures of the connecting piece 123, the plurality of spacers 122 and the reinforcing member 121 may be referred to contents recorded in detail in the above-mentioned embodiments, and will not be repeated here.

The terms "upper" and "lower" used in the present disclosure are used to describe the relative positional relationship of various structures in the drawings, which is only for the convenience of description and clarity, and is not used to limit the applicable scope of the present disclosure. Change or adjustment of the relative relationship of the terms should be regarded as the applicable scope of the present disclosure without substantially changing the technical content.

It should be noted that: in the present disclosure, unless expressly stipulated and defined otherwise, the first feature "on" or "under" the second feature may be that the first and second features are in direct contact, or the first and second features are in indirect contact through an intermediate medium. Moreover, the first feature "above", "over" and "upper" the second feature may be that the first feature is directly above or diagonally above the second feature, or may simply mean that a height of the first feature is higher than that of the second feature. The first feature "below", "under" and "lower" the second feature may be that the first feature is directly below or diagonally below the second feature, or may simply mean that the height of the first feature is less than that of the second feature.

Moreover, in the present disclosure, unless expressly stipulated and defined otherwise, terms such as "installation", "connected", "connection", "fixing", and the like, should be understood broadly, for example, the connection may be fixed connection, or detachable connection or integral connection; may be direct connection, may also be indirect connection through an intermediate medium, and may also be internal communication of two elements or interaction relationship of two elements. The specific meaning of the above terms in the present disclosure may be understood in a specific case by those of ordinary skills in the art.

In the description of this specification, the descriptions to the reference terms "one embodiment", "some embodiments", "illustrative embodiments", "examples", "specific examples" or "some examples" mean that the specific features, structures, materials or characteristics described in connection with this embodiment or example are included in at least one embodiment or example of the present disclosure. In this specification, the schematic representation of the above terms does not necessarily refer to the same embodiment or example. Moreover, the specific features, structures, materials or characteristics described may be combined in any one or more embodiments or examples in a suitable manner.

Finally, it should be noted that: the above embodiments are only intended to illustrate the technical solutions of the present disclosure, rather than limiting the present disclosure. Although the present disclosure has been described in detail with reference to the foregoing embodiments, those of ordinary skills in the art should understand that: the technical solution described in the foregoing embodiments can still be modified, or some or all of the technical features in the technical solutions can be replaced by equivalents. However, these modifications or replacements do not cause the essences of the corresponding technical solutions to depart from the scope of the technical solutions of the embodiments of the present disclosure.

## Claims

1. A blade assembly, wherein the blade assembly (100) comprises:
a blade body (110) provided with a blade root (111), a blade tip (112), a leading edge (113) and a trailing edge (114), wherein the leading edge (113) and the trailing edge (114) extending between the blade root (111) and the blade tip (112); and
a noise reducer (120) arranged on the blade body (110), wherein the noise reducer (120) comprises at least one reinforcing member (121) and a plurality of spacers (122) arranged at intervals along a spanwise direction of the blade body (110), the reinforcing member (121) is connected with at least one of the spacers (122), and the reinforcing member (121) and the spacers (122) are arranged adjacent to the trailing edge (114);
wherein, in a direction parallel to a chord (115) of the blade body (110), at least some of the spacers (122) and the reinforcing member (121) are located outside a boundary defined by the chord (115), and there is an interval space between the reinforcing member (121) and the trailing edge (114).

2. The blade assembly according to claim 1, wherein, in the direction parallel to the chord (115) of the blade body (110), at least some of the spacers (122) are located outside the boundary defined by the chord (115).

3. The blade assembly according to claim 2, wherein the spacer (122) is provided with a first end (1221) and a second end (1222), and in the direction parallel to the chord (115) of the blade body (110), the first end (1221) is located inside the boundary defined by the chord (115), and the second end (1222) exceeds the trailing edge (114).

4. The blade assembly according to claim 1, wherein, in the direction parallel to the chord (115) of the blade body (110), the spacer (122) is located outside the boundary defined by the chord (115).

5. The blade assembly according to claim 4, wherein the noise reducer (120) further comprises a connecting piece (123), the plurality of spacers (122) are connected to the blade body (110) through the connecting piece (123), and the connecting piece (123) is spaced from the reinforcing member (121).

6. The blade assembly according to claim 5, wherein the noise reducer (120) further comprises a positioning piece (124), and the positioning piece (124) is connected with the connecting piece (123); and
when the noise reducer (120) is connected to the blade body (110), the positioning piece (124) abuts against the trailing edge (114) or a region adjacent to the trailing edge (114).

7. The blade assembly according to any one of claims 1 to 6, wherein in the noise reducer (120), a first one of the spacers (122) along the spanwise direction of the blade body (110) is defined as a first spacer, a last one of the spacers (122) is defined as a second spacer, a connection line of a centroid of a first end (1221) of the first spacer and a centroid of a second end (1222) of the first spacer is defined as a first connection line (1223), a connection line of a centroid of a first end (1221) of the second spacer and a centroid of a second end (1222) of the second spacer is defined as a second connection line (1224), a connection line of centroids of the first ends (1221) of all the spacers (122) is defined as a third connection line (1225), and a connection line of centroids of the second ends (1222) of all the spacers is defined as a fourth connection line (1226);
wherein, the first connection line (1223), the second connection line (1224), the third connection line (1225), and the fourth connection line (1226) are connected to form a three-dimensional curved surface (β).

8. The blade assembly according to any one of claims 1 to 6, wherein, as viewed from a top view of the noise reducer (120), the reinforcing member (121) is configured as a quadrilateral and is provided with a first side (1211), a second side (1212), a third side (1213), and a fourth side (1214) which are sequentially connected; and
the first side (1211) and the third side (1213) are parallel to each other and form a preset angle with a center line of the spacers (122).

9. The blade assembly according to claim 8, wherein the preset angle is smaller than 45°.

10. The blade assembly according to claim 8, wherein at least two reinforcing members (121) are provided, and two adjacent reinforcing members (121) are symmetrically arranged with respect to a gap between two adjacent spacers (122), forming a generally V-shaped configuration with an opening towards the blade body (110).

11. The blade assembly according to claim 1, wherein cross-sectional shapes of the plurality of spacers (122) are the same or different; and/or,
the cross-sectional shapes of at least some of the spacers (122) comprise one of a rectangle, a circle, a triangle or an oval; and/or,
cross-sectional dimensions of at least some of the spacers (122) gradually decrease from first ends (1221) of the spacers (122) to second ends (1222) of the spacers (122); and/or,
materials of at least some of the spacers (122) comprise one of a plastic, a composite material, or a porous material.

12. The blade assembly according to claim 1, wherein the blade body (110) is further provided with a suction side (116) and a pressure side (117), and the noise reducer (120) is fixed on the suction side (116).

13. The blade assembly according to claim 1, wherein the blade body (110) is further provided with a suction side (116) and a pressure side (117), and the noise reducer (120) is fixed on the pressure side (117).

14. A noise reducer, wherein the noise reducer (120) at least comprises:
several spacers (122) arranged at intervals along a predetermined direction; and
a reinforcing member (121) connected with at least one of the spacers (122); a first end (1221) of at least one of the spacers (122) is not connected to the reinforcing member (121).

15. The noise reducer according to claim 14, wherein the noise reducer (120) further comprises a connecting piece (123) for being connected with a blade body (110) and a positioning piece (124), the positioning piece (124) is connected with the connecting piece (123), and the positioning piece (124) is used for abutting against a trailing edge (114) when the noise reducer (120) is connected to the blade body (110); and/or,
cross-sectional shapes of the plurality of spacers (122) are the same or different; and/or,
the cross-sectional shapes of at least some of the spacers (122) comprise one of a rectangle, a circle, a triangle or an oval; and/or,
cross-sectional dimensions of at least some of the spacers (122) gradually decrease from first ends (1221) of the spacers (122) to second ends (1222) of the spacers (122); and/or,
materials of at least some of the spacers (122) comprise one of a plastic, a composite material, or a porous material; and,
the spacers (122) are connected to the connecting piece (123), and there being an interval space between the reinforcing member (121) and the connecting piece (123).
